# EUROPEAN PATENT SPECIFICATION

(11) **EP 2 357 320 B1**
(45) Date of publication and mention of the grant of the patent: **31.07.2013**
(21) Application number: 09828909.3
(22) Date of filing: 15.06.2009
(51) Int. Cl.: F01D 1/08, F01D 1/06, F01D 1/22, F01D 5/04, F01D 5/14, F01D 15/00

(54) **IMPELLER FOR TURBINE**
ROTOR FÜR EINE TURBINE
ROUE POUR TURBINE

(30) Priority: 28.11.2008 JP 2008303877
(43) Date of publication of application: 17.08.2011
(73) Proprietor: Mac Co., Ltd., Chiba 283-0826 (JP)
(72) Inventor: MATSUSHITA, Hiroaki, Chiba-shi Chiba 264-0026 (JP)
(74) Representative: Regimbeau
(86) International application number: PCT/JP2009/061265
(87) International publication number: WO 2010/061659

(56) References cited:
- FR-A- 456 375
- FR-A- 456 375
- JP-A- 58 140 404
- JP-A- 58 140 404
- JP-A- 2002 174 166
- JP-A- 2002 174 166
- JP-A- 2007 211 677
- US-A- 1 793 179
- US-A1- 2003 053 909
- US-A1- 2007 116 561

## Description

### Technical Field

The present invention mainly relates to an impeller for a turbine, which is built to be freely rotatable in a casing and is rotated by an impulsive force of an expanded suitable working gas (for example, Freon gas or the like that is a heat medium) which is ejected from an inlet of the casing at high speed, being received by a plurality of vane portions, and drives a power generator or the like by using the rotational force, and in particular, to an impeller for a turbine, which is devised so as to be able to generate a well-balanced and stable rotational force by efficiently using an impulsive force of the working gas, to be able to be easily manufactured in a simple configuration, to be able to be configured to be small, light weight, and compact, to be suitable for mass production, to significantly reduce costs, to be excellent in versatility, and to be economical.

### Background Art

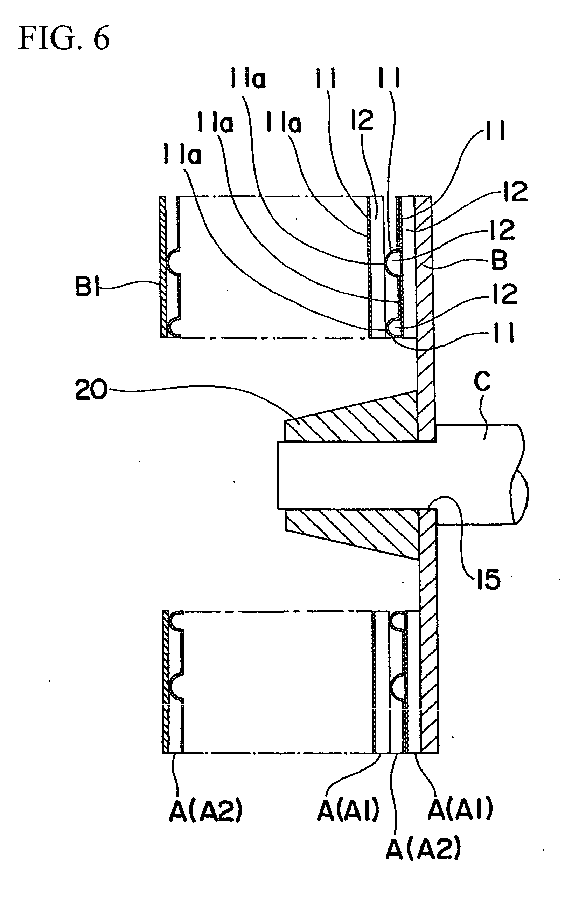

In the past, as this type of impeller for a turbine, various impellers for turbines have been provided, and for example, in Japanese Unexamined Patent Application Publication No. 2003-201802, there is an impeller for a turbine shown as a prior example (FIG. 6). Such a prior example is an impeller for a turbine, in which a complicated three-dimensional curvature processing is carried out in each of a number of vanes (blades) and which is made so as to be able to convert the impulsive force of a working gas into a rotational force with high efficiency.

Also, in Japanese Unexamined Patent Application Publication No. SH058-140404, a turbine blade of a turbine for a refrigeration cycle is disclosed. This is a turbine blade which is incorporated in the inside of a turbine that is incorporated in a refrigeration cycle in order to extract power by using high speed rotation after expansion in the refrigeration cycle, wherein the blade is made into an approximate disk shape and a plurality of protrusions is formed (for example, by a press working) at the outer circumferential portion of the disk.

US2007/0116561 discloses a rotor comprising a plurality of passages for transferring momentum into and out of a fluid, wherein said passages have a geometry adapted to establish and maintain laminar flow of the fluid passing through said passages. FR456375 discloses a rotor having a device for admitting and evacuating vapour from the rotor.

However, in related art of the impeller for a turbine (as above-described, for example), in order to from each of a number of blades (vanes) into a complicated three-dimensional curved shape, which is required to apply many working processes, and an impeller for a turbine manufactured in this way becomes significantly high in cost such that it becomes difficult to provide the impeller at a low cost.

Also, in the related art of the turbine blade of a turbine for a refrigeration cycle (as in the latter, for example), only a relatively simple blade can be formed and there is a drawback in that it is difficult to efficiently convert the impulsive force of a working gas into a rotational force.

### Disclosure of Invention

The object of the present invention is to resolve the above-described drawbacks or the like and also provide an impeller for a turbine, which can efficiently convert the impulsive force of a working gas into a rotational force, which can obtain a well-balanced and stable rotational force, which can be easily manufactured in a simple configuration, which can be configured to be small, light weight, and compact, which is suitable for mass production, which significantly reduces costs, which is excellent in versatility, and which is economical.

According to a first aspect of the present invention, there is provided an impeller for a turbine, which includes an impeller body which is made by fixing two or more types of press-formed disk blades in an alternately stacked state using brazing method; includes a base plate to which the impeller body is fixed; and includes a rotating shaft which is fixed to the base plate and which is rotated by an impulsive force of a working gas which is ejected. The disk blade has a basal portion formed in annular disk-shape, a plurality of elongated pressed vane portions which are disposed so as to connect an inner circumferential edge and an outer circumferential edge of the basal portion, which projects from one surface side of the basal portion, thereby being capable of applying the impulsive force of the working gas, is provided at the basal portion, a recessed space where an other surface side of the basal portion is in an opened state is formed in each pressed vane portion, and the pressed vane portion is configured such that a projecting rear portion which is the most protruded ridge portion thereof is disposed so as to be fixed to the surface of the other side of the basal portion of the adjacent disk blade using brazing method and to intersect the recessed space of the pressed vane portion of the adjacent disk blade at an intersecting communication space portion and a portion of the working gas which imparts the impulsive force to the pressed vane portion so as to move in the recessed space of the adjacent disk blade through the intersecting communication space portion and move forward in the rotational direction beyond the projecting rear portion of the pressed vane portion in the intersecting communication space portion.

Also, according to a second aspect of the present invention, there is provided an impeller for a turbine, in which the pressed vane portions of one type of disk blade are disposed in the radial direction from the inner circumferential edge toward the outer circumferential edge of the basal portion.

Also, according to a third aspect of the present invention, there is provided an impeller for a turbine, in which the pressed vane portions of the other type of disk blade are disposed in a direction in which a position in the outer circumferential edge is displaced backward in the rotational direction from a standard direction, which is the radial direction from the inner circumferential edge toward the outer circumferential edge of the basal portion.

Also, according to a fourth aspect of the present invention, there is provided an impeller for a turbine, in which the pressed vane portions of the other type of disk blade are disposed in a direction in which a position in the outer circumferential edge is displaced forward in the rotational direction from a standard direction, which is the radial direction from the inner circumferential edge toward the outer circumferential edge of the basal portion.

Also, according to a fifth aspect of the present invention, there is provided an impeller for a turbine, in which the inner circumferential edge of the basal portion of one type of disk blade has a larger diameter than the inner circumferential edge of the other type of disk blade or the inner circumferential edge of the basal portion of the other type of disk blade has a larger diameter than the inner circumferential edge of one type of disk blade.

Also, according to a sixth aspect of the present invention, there is provided an impeller for a turbine, in which the outer circumferential edge of the basal portion of one type of disk blade has a smaller diameter than the outer circumferential edge of the other type of disk blade or the outer circumferential edge of the basal portion of the other type of disk blade has a smaller diameter than the outer circumferential edge of one type of disk blade.

Therefore, according to the first aspect of the present invention, since the impeller for a turbine includes an impeller body which is made by fixing two or more types of press-formed disk blades in an alternately stacked state using brazing method, a base plate to which the impeller body is fixed, and a rotating shaft which is fixed to the base plate, it can be easily manufactured in a simple configuration and be configured to be small, light weight, and compact.

Further, the disk blade itself can be easily mass-produced, so that a significant reduction in cost can be attained, whereby an economical impeller for a turbine can be provided.

Furthermore, the disk blade itself is provided with a plurality of pressed vane portions which connects the inner circumferential edge and the outer circumferential edge of the disk blade, so that it is possible to increase the strength and rigidity thereof. In addition, since the projecting rear portion of the pressed vane portion is disposed so as to intersect the recessed space of the pressed vane portion of the adjacent disk blade and is fixed using brazing method, it is possible to increase the strength and rigidity of the entire impeller body. Consequently, it becomes possible to use a thin plate material as the disk blade and it also becomes possible to provide a lighter impeller for a turbine.

Then, since the pressed vane portion is disposed so as to intersect the recessed space of the pressed vane portion of the adjacent disk blade at the intersecting communication space portion and the impeller body has two or more types of disk blade fixed to each other in an alternately stacked state using brazing method, the action of a force that the impeller body is subjected to the impulsive force of the working gas becomes different in each of the pressed vane portions of the two or more types of disk blades, so that it is possible to rotate the impeller body in a well-balanced and stable manner. Furthermore, the direction of each of the pressed vane portions of the rotating impeller body always changes with respect to the ejection direction of the working gas. However, the impeller body relatively evenly receives the impulsive force of the working gas at any rotational position, so that variations, unevenness, or the like in the impulsive force which is imparted to the impeller body can be suppressed, whereby it helps to rotate the impeller body in a well-balanced and stable manner.

In particular, since the disk blade has a basal portion formed in annular disk-shape, a plurality of elongated pressed vane portions which is disposed so as to connect the inner circumferential edge and the outer circumferential edge of the basal portion and which projects from one surface side of the basal portion, thereby being capable of applying the impulsive force of the working gas, is provided at the basal portion, the recessed space where the other surface side of the basal portion is in an opened state is formed in each pressed vane portion, and the pressed vane portion is configured such that the projecting rear portion which is the most protruded ridge portion thereof is disposed so as to be fixed to the surface of the other side of the basal portion of the adjacent disk blade using brazing method and to intersect the recessed space of the pressed vane portion of the adjacent disk blade at the intersecting communication space portion and a portion of the working gas which imparts the impulsive force to the pressed vane portion so as to move in the recessed space of the adjacent disk blade through the intersecting communication space portion and move forward in the rotational direction beyond the projecting rear portion of the pressed vane portion in the intersecting communication space portion, it becomes possible to constitute the impeller body by combining two or more types of disk blades having different actions on the impulsive force of the working gas and in the impeller body as a whole, a well-balanced and more stable rotational force can be obtained by the impulsive force of the working gas.

Further, an impeller for a turbine, in which a rotational force depending a use or a purpose thereof can be obtained, can be relatively easily constituted by changing the combination pattern of the disk blades. Consequently, an impeller for a turbine having excellent versatility can be provided easily and at a low cost.

In addition, a portion of the working gas which imparts an impulsive force to the pressed vane portion moves in the recessed space of the adjacent disk blade through the intersecting communication space portion and moves forward in the rotational direction beyond the projecting rear portion of the pressed vane portion in the intersecting communication space portion, so that a flow path of the working gas can be three-dimensionally configured and it becomes possible to convert the impulsive force of the working gas more efficiently into a rotational force.

Furthermore, a portion of the working gas which imparts an impulsive force to the pressed vane portion moves to the negative pressure surface side of the pressed vane portion forward in the rotational direction beyond the projecting rear portion of the pressed vane portion in the intersecting communication space portion and this acts as elimination pressure of negative pressure which is applied to the pressed vane portion, so that a rotational force increases.

Also, according to the second aspect of the present invention, since the pressed vane portions of one type of disk blade are disposed in the radial direction from the inner circumferential edge toward the outer circumferential edge of the basal portion, a disk blade capable of being subjected to an impulsive force which has a high rate where the rotary torque is increased by a working gas is obtained.

Also, according to the third aspect of the present invention, since the pressed vane portions of the other type of disk blade are disposed in a direction in which a position in the outer circumferential edge is displaced backward in the rotational direction from a standard direction, which is the radial direction from the inner circumferential edge toward the outer circumferential edge of the basal portion, a disk blade capable of being subjected to an impulsive force which has a high rate where the rotating speed is increased by a working gas is obtained.

Also, according to the fourth aspect of the present invention, since the pressed vane portions of the other type of disk blade are disposed in a direction in which a position in the outer circumferential edge is displaced forward in the rotational direction from a standard direction, which is the radial direction from the inner circumferential edge toward the outer circumferential edge of the basal portion, a disk blade capable of being subjected to an impulsive force which has a high rate where the rotating speed is increased by a working gas is obtained.

Also, according to the fifth aspect of the present invention, since the inner circumferential edge of the basal portion of one type of disk blade has a larger diameter than the inner circumferential edge of the other type of disk blade or the inner circumferential edge of the basal portion of the other type of disk blade has a larger diameter than the inner circumferential edge of one type of disk blade, the inner circumferential edge portion of the basal portion of one type of disk blade is not present in a space portion between the inner circumferential edges of the basal portions of the other type of adjacent disk blades or the inner circumferential edge portion of the basal portion of the other type of disk blade is not present in a space portion between the inner circumferential edges of the basal portions of one type of adjacent disk blades, such that passage resistance of the working gas in the space portion is reduced, whereby loss of rotational energy which is imparted to the impeller for a turbine by the working gas can be reduced.

Further, according to the sixth aspect of the present invention, since the outer circumferential edge of the basal portion of one type of disk blade has a smaller diameter than the outer circumferential edge of the other type of disk blade or the outer circumferential edge of the basal portion of the other type of disk blade has a smaller diameter than the outer circumferential edge of one type of disk blade, the outer circumferential edge portion of the basal portion of one type of disk blade is not present in a space portion between the outer circumferential edges of the basal portions of the other type of adjacent disk blades or the outer circumferential edge portion of the basal portion of the other type of disk blade is not present in a space portion between the outer circumferential edges of the basal portions of one type of adjacent disk blades, such that passage resistance of the working gas in the space portion is reduced, whereby loss of rotational energy which is imparted to the impeller for a turbine by the working gas can be reduced.

### Brief Description of Drawings

FIG. 1 is a schematic side view with a partial cutaway, illustrating a state where an impeller for a turbine according to the present invention is incorporated in a casing.
FIG. 2 is a fragmentary exploded perspective view with a portion omitted, illustrating the impeller for a turbine according to the present invention.
FIG. 3 is a front view illustrating a disk blade of the impeller for a turbine according to the present invention.
FIG. 4 is a front view illustrating another disk blade of the impeller for a turbine according to the present invention.
FIG. 5 is a schematic front view illustrating an impeller body of the impeller for a turbine according to the present invention.
FIG 6 is a cross-sectional side view with a portion omitted, illustrating the impeller for a turbine according to the present invention.

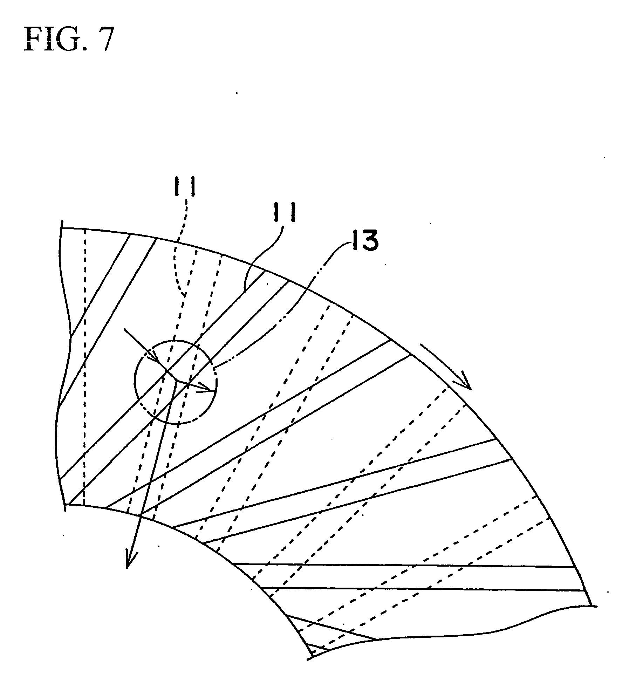

FIG. 7 is a fragmentary schematic front view illustrating an intersecting communication space portion of the impeller for a turbine according to the present invention.

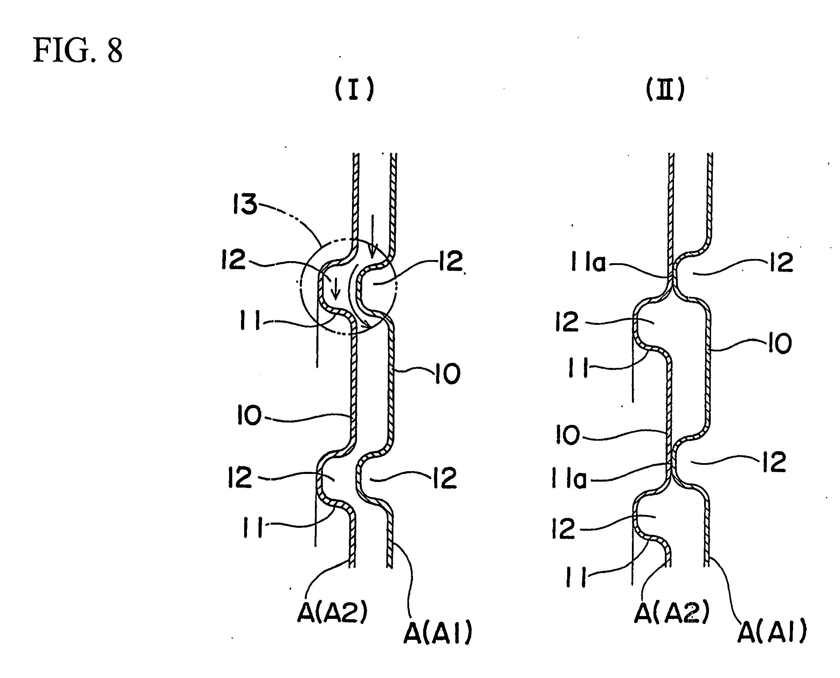

FIGS. 8(I) and 8(II) show fragmentary end views of the impeller for a turbine according to the present invention, wherein FIG. 8(I) is a fragmentary end view in the intersecting communication space portion and FIG. 8(II) is a fragmentary end view in portions other than the intersecting communication space portion.
FIG. 9 is a front view illustrating another disk blade of the impeller for a turbine according to the present invention.
FIG. 10 is a front view illustrating another disk blade of the impeller for a turbine according to the present invention.
FIG. 11 is a front view illustrating another disk blade of the impeller for a turbine according to the present invention.
FIG. 12 is a front view illustrating another disk blade of the impeller for a turbine according to the present invention.
FIG 13 is a schematic front view illustrating an impeller body of another impeller for a turbine according to the present invention.
FIG 14 is a schematic front view illustrating an impeller body of another impeller for a turbine according to the present invention.
FIG 15 is a schematic cross-sectional side view illustrating a portion of another impeller for a turbine according to the present invention.
FIG 16 is a schematic cross-sectional side view illustrating a portion of another impeller for a turbine according to the present invention.

### Embodiments of the Invention

The present invention which is described below on the basis of an illustrated example is as follows.

The present invention is an impeller for a turbine, which is rotatably built in a casing D having an inlet 30 and an outlet 31 and also is made so as to rotate by an impulsive force of an expanded working gas (for example, Freon gas or the like that is a heat medium), which is ejected from the inlet 30 of the casing D at high speed, being received by a plurality of pressed vane portions 11 and drive a power generator or the like by using the rotational force.

Then, the impeller for a turbine includes an impeller body which is made by fixing two or more types of press-formed disk blades A in an alternately stacked state using brazing method, a base plate B to which the impeller body is fixed, and a rotating shaft C which is fixed to the base plate B.

Further, the disk blade A has a basal portion 10 formed in annular disk-shape, at the basal portion 10, a plurality of elongated pressed vane portions 11 is disposed so as to appropriately connect an inner circumferential edge and an outer circumferential edge of the basal portion and which projects from one surface side of the basal portion, thereby being capable of applying the impulsive force of the working gas, and a recessed space 12 where the other surface side of the basal portion 10 is in an opened state is formed in each pressed vane portion 11.

Moreover, the pressed vane portion 11 is configured such that a projecting rear portion 11 a which is the most protruded ridge portion thereof is disposed so as to be fixed to the surface of the other side of the basal portion 10 of the adjacent disk blade A and to intersect the recessed space 12 of the pressed vane portion 11 of the adjacent disk blade A at an intersecting communication space portion 13 and a portion of the working gas which imparts the impulsive force to the pressed vane portion 11 so as to move in the recessed space 12 of the adjacent disk blade A through the intersecting communication space portion 13 and to move forward in the rotational direction beyond the projecting rear portion 11 a of the pressed vane portion 11 in the intersecting communication space portion 13.

Also, the pressed vane portions 11 of one type of disk blade A are disposed in the radial direction from the inner circumferential edge toward the outer circumferential edge of the basal portion 10.

Further, the pressed vane portions 11 of the other type of disk blade A are disposed in a direction in which a position in the outer circumferential edge is displaced backward in the rotational direction from a standard direction, which is the radial direction from the inner circumferential edge toward the outer circumferential edge of the basal portion 10.

Then, the pressed vane portions 11 of the other type of disk blade A are disposed in a direction in which a position in the outer circumferential edge is displaced forward in the rotational direction from a standard direction, which is the radial direction from the inner circumferential edge toward the outer circumferential edge of the basal portion 10.

### Example

The disk blade A which is used in the impeller for a turbine is constituted by, for example, a metallic (for example, stainless steel) disk having a relatively thin annular disk shape and excellent corrosion resistance. Further, the disk blade is configured such that a number of pressed vane portions 11 are provided at the disk by a single (or, a plurality is also acceptable) press working and also a number of pressed vane portions 11 project from one surface side of the disk. Furthermore, the pressed vane portions 11 are formed from the inner circumferential edge to the outer circumferential edge of the disk. Also, a portion of the disk, in which the pressed vane portions 11 are not formed by the press working, becomes the basal portion 10, the inside of the projected pressed vane portion 11 becomes the recessed space 12, and the most protruded ridge portion of the pressed vane portion 11 becomes the projecting rear portion 11 a.

Further, two or more types of disk blades A, in which the dimensions, the shapes, the number, or the disposition state of the pressed vane portions 11 or the dimension or the like of the basal portion 10 is changed, are formed, and the impeller bodies, in which the combination patterns of the disk blades A are different from each other, can be freely constituted by appropriately selecting these disk blades A and also fixing the appropriate number of disk blades in an alternately stacked state.

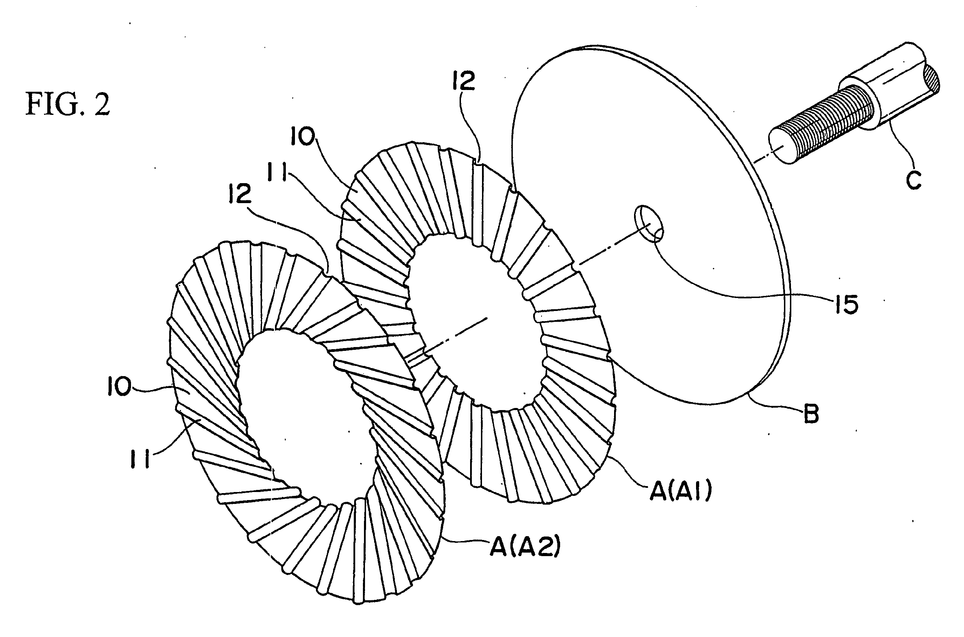

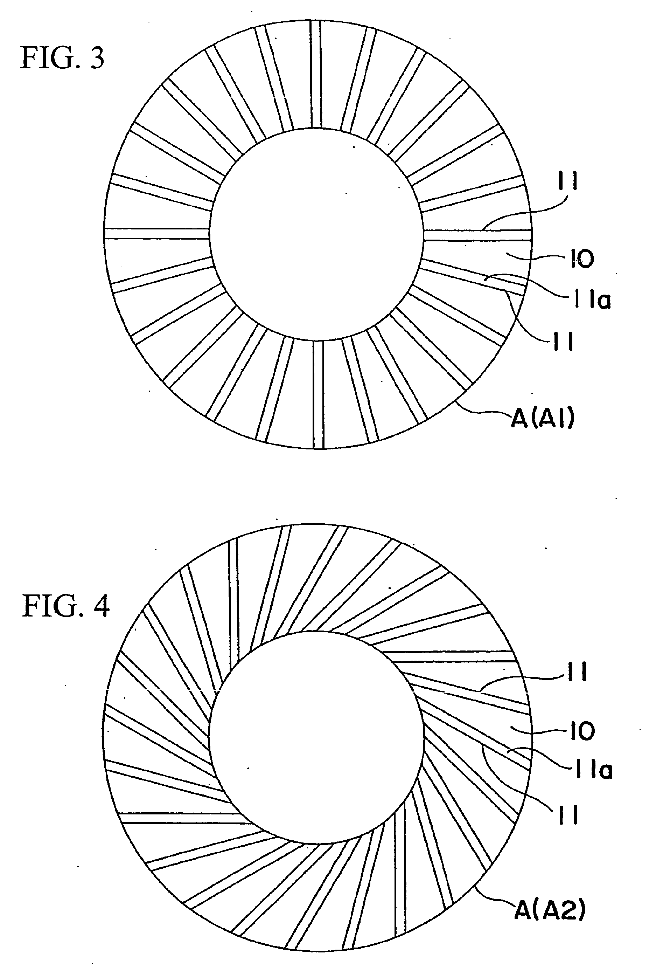

Then, describing each disk blade A of the illustrated examples, first, the disk blade A(A1) of FIG. 3 (and FIG 2) is configured such that a plurality (for example, 24 pieces) of pressed vane portions 11 is disposed in the radial direction from the inner circumferential edge toward the outer circumferential edge of the basal portion 10.

Also, the disk blade A(A2) of FIG. 4 (and FIG. 2) is configured such that a plurality (for example, 24 pieces) of pressed vane portions 11 is disposed in a direction in which a position in the outer circumferential edge is varied from a standard direction, which is the radial direction from the inner circumferential edge toward the outer circumferential edge of the basal portion 10, forward in the rotational direction (or, may be disposed in a direction in which a position in the outer circumferential edge is varied backward in the rotational direction).

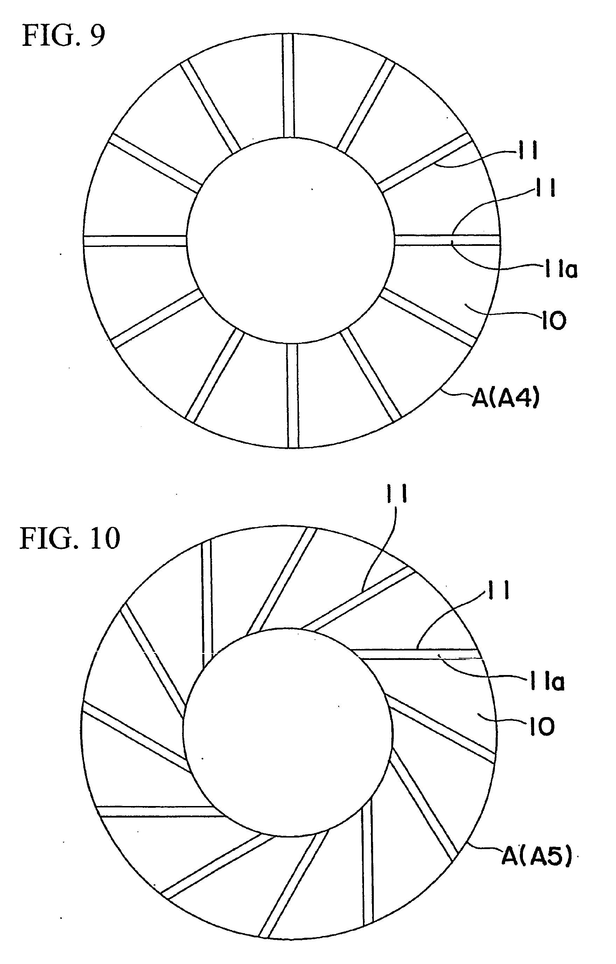

Also, the disk blade A(A4) of FIG. 9 is configured such that a plurality (for example, 12 pieces) of pressed vane portions 11 is disposed in the radial direction from the inner circumferential edge toward the outer circumferential edge of the basal portion 10.

Then, the disk blade A(A5) of FIG 10 is configured such that a plurality (for example, 12 pieces) of pressed vane portions 11 is disposed in a direction in which a position in the outer circumferential edge is varied from a standard direction, which is the radial direction from the inner circumferential edge toward the outer circumferential edge of the basal portion 10, forward (or, backward is also acceptable) in the rotational direction.

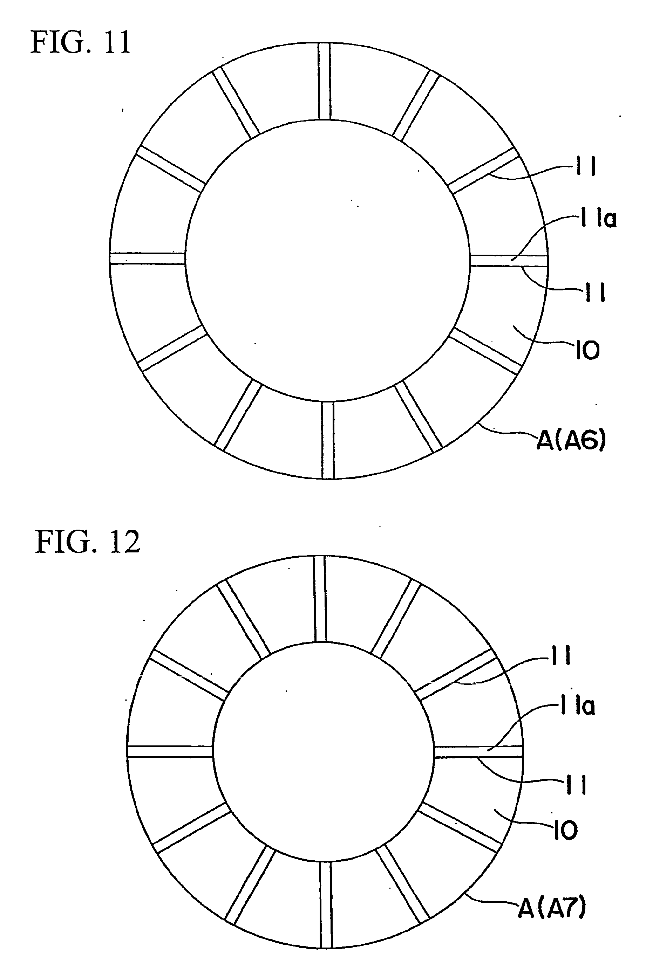

Then, the disk blade A(A6) of FIG. 11 is configured such that the inner circumferential edge of the basal portion 10 has a larger diameter than the inner circumferential edge of another disk blade A and a plurality (for example, 12 pieces) of pressed vane portions 11 is disposed in the radial direction from the inner circumferential edge toward the outer circumferential edge of the basal portion 10.

In addition, the disk blade A(A7) of FIG. 12 is configured such that the outer circumferential edge of the basal portion 10 has a smaller diameter than the outer circumferential edge of another disk blade A and a plurality (for example, 12 pieces) of pressed vane portions 11 is disposed in the radial direction from the inner circumferential edge toward the outer circumferential edge of the basal portion 10.

Also, the impeller body which is constituted by using the disk blades A as described above is constituted by fixing two or more types of disk blades A in an alternately stacked state using brazing method.

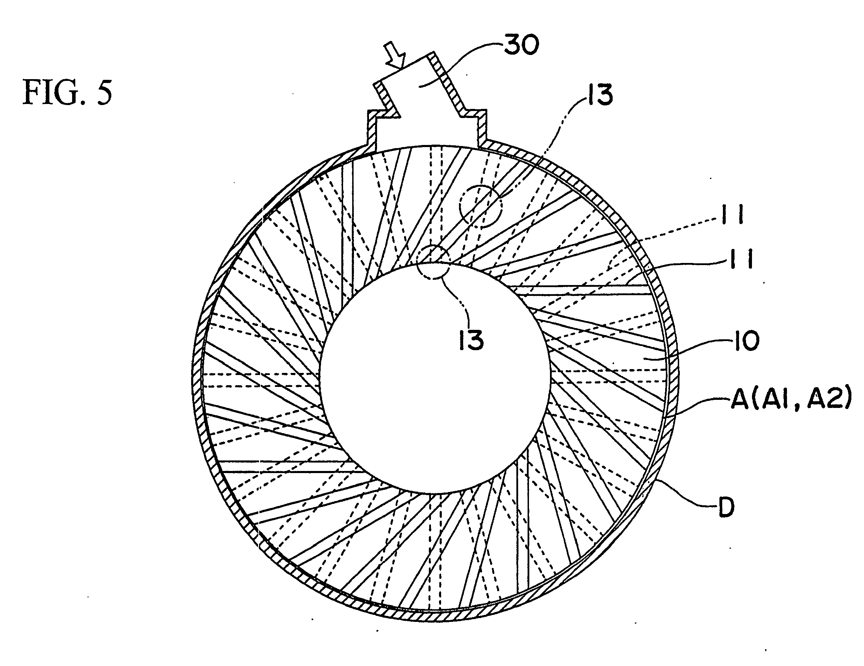

Specifically, the impeller body shown in FIG. 5 is constituted by fixing the disk blade A(A1) of FIG. 3 and the disk blade A(A2) of FIG 4 in an alternately stacked state using brazing method. Further, the impeller body is constituted such that when the projecting rear portion 11a which is the most protruded ridge portion of the pressed vane portion 11 is fixed to the surface of the other side of the basal portion 10 of the adjacent disk blade A, the projecting rear portion 11 a is disposed so as to intersect the recessed space 12 of the pressed vane portion 11 of the adjacent disk blade A at the intersecting communication space portion 13 and furthermore, the intersecting communication space portion 13 is provided at two locations with respect to one pressed vane portion 11. That is, the strength and rigidity of the entire impeller body increase and excellent durability is obtained. Further, it becomes possible to more complicatedly conduct the working gas by the intersecting communication space portions 13, and an impeller body is formed in which a superior (for example, well-balanced, efficient, and low in energy loss) rotational force is provided.

In addition, a configuration is made such that in the intersecting communication space portion 13, a portion of the working gas which imparts an impulsive force to the pressed vane portion 11 so as to move in the recessed space 12 of the adjacent disk blade A and to move forward in the rotational direction beyond the projecting rear portion 11a of the pressed vane portion 11.

The base plate B is formed, for example, into a metallic thick disk shape, in which a mounting hole 15 for the rotating shaft C is perforated at the center thereof, and is fixed to a base end surface portion of the impeller body using brazing method.

The symbol B1 in the drawings indicates a leading end plate which is fixed to a leading end surface portion of the impeller body using brazing method, and the leading end plate B 1 is formed into an annular disk shape using a suitable metal material and provided so as to increase the strength or the rigidity of the leading end surface portion of the impeller body.

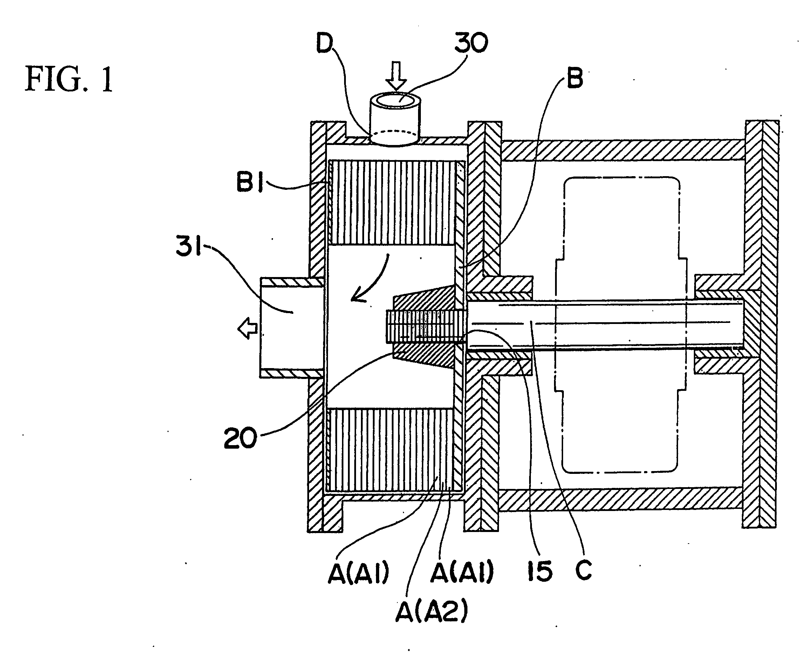

The rotating shaft C is rotatably mounted in the casing D, a case of a power generator section, which is provided continuously to the casing D, or the like (refer to FIG. 1) and constituted so as to be able to smoothly rotate without loss and also stably support the impeller body. Also, a configuration is made such that a male screw portion is formed at a leading end portion of the rotating shaft C and the impeller body can be reliably and easily fixed to the rotating shaft C by a mounting nut 20 capable of being thread-engaged with the male screw portion.

As for the brazing method for fixing the disk blades A to each other or fixing the base plate B or the leading end plate Bl, for example, a method is adopted which can dissolve only a metal binder material (for example, copper, nickel, or the like) having a melting point lower than that of the disk blade A (made of stainless steel), the base plate B, or the leading end plate B1 and then reliably fix the disk blades A to each other or fix the base plate B or the leading end plate B 1 by using it as a melt adhesive agent.

Also, when fixing a plurality of disk blades A in a stacked state, for example, a binder material such as a copper foil having a melting point lower than that of the disk blade A is stacked between the disk blades A which are stacked and the binder material is then melted by heating them in a vacuum, so that contact portions between a plurality of disk blades A (the projecting rear portion 11a of the pressed vane portion 11 and the other surface of the basal portion 10 in the adjacent disk blades A) can be simply and reliably vacuum-brazed by the melted binder material. Incidentally, this method is also used when fixing the base plate B or the leading end plate B 1 to the impeller body.

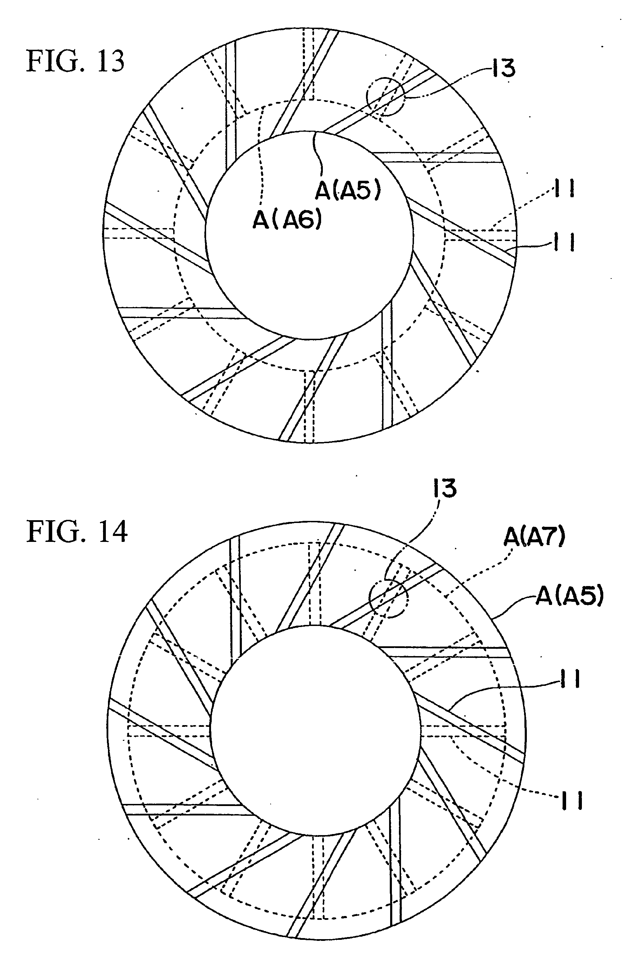

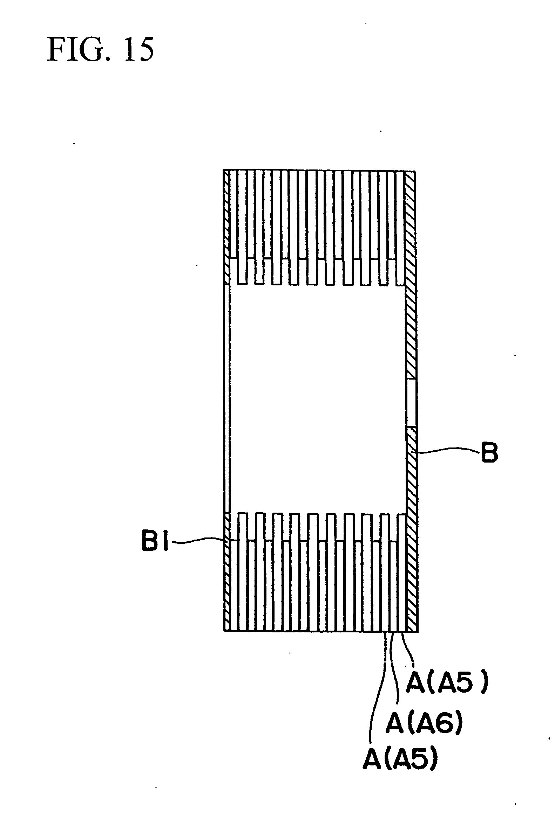

Also, the impeller body shown in FIGS. 13 and 15 is an impeller body constituted by fixing the disk blade A(A6) of FIG. 11 and the disk blade A(A5) of FIG. 10 in an alternately stacked state using brazing method, and this is constituted such that the inner circumferential edge of the basal portion 10 of the disk blade A(A6) has a larger diameter than the inner circumferential edge of the disk blade A(A5), so that the inner circumferential edge portion of the basal portion 10 of the disk blade A(A6) is not present in a space portion between the inner circumferential edges of the basal portions 10 of the adjacent disk blades A(A5), whereby passage resistance of the working gas in the space portion is reduced, and thus formed such that loss of rotational energy which is imparted to the impeller for a turbine by the working gas can be reduced.

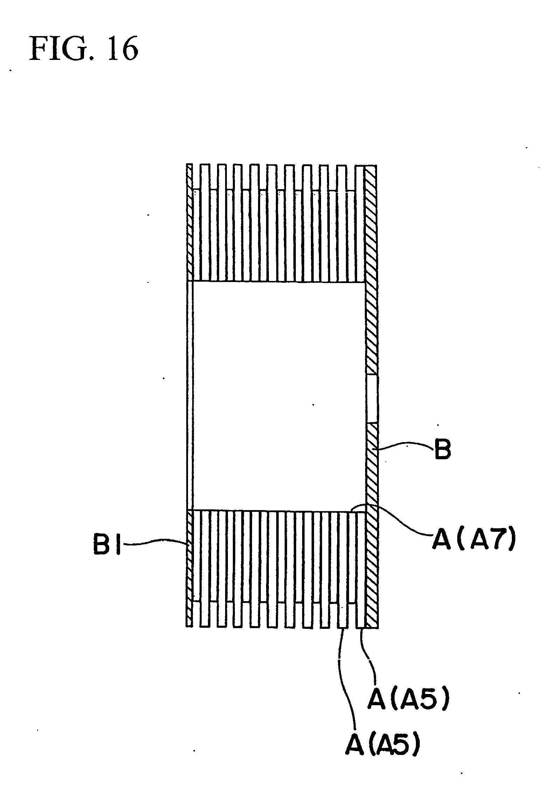

Further, the impeller body shown in FIGS. 14 and 16 is an impeller body constituted by fixing the disk blade A(A7) of FIG. 12 and the disk blade A(A5) of FIX 10 in an alternately stacked state using brazing method, and this is constituted such that the outer circumferential edge of the basal portion 10 of the disk blade A(A7) has a smaller diameter than the outer circumferential edge of the disk blade A(A5), so that the outer circumferential edge portion of the basal portion 10 of the disk blade A(A7) is not present in a space portion between the outer circumferential edges of the basal portions 10 of the adjacent disk blades A(A5), whereby passage resistance of the working gas in the space portion is reduced, and thus the impeller body formed such that loss of rotational energy which is imparted to the impeller for a turbine by the working gas can be reduced.

As for the casing D, for example, a casing provided with the inlet 30, through which the working gas is blown in, and the outlet 31, through which the working gas is discharged, is adopted. Furthermore, the inlet 30 is opened at an outer circumferential wall portion of the casing D and the outlet 31 is opened at the center of a side wall portion of one side of the casing D. Also, in the inlet 30 of the casing D, an angle or the like, at which the working gas is blown in, can be set and changed freely and appropriately.

The impeller for a turbine according to the present invention is constituted as described above and is used, for example, to generate a rotational force in the impeller for a turbine by ejecting expanded working gas from the inlet 30 of the casing D at high speed, thereby making the impulsive force of the working gas act on a plurality of pressed vane portions 11, and drive a power generator or the like by using the rotational force.

## Claims

1. An impeller for a turbine, which is rotated in use by an impulsive force of a working gas which is ejected, the impeller for a turbine comprises:
an impeller body which is made by fixing two or more types of press-formed disk blades (A) in an alternately stacked state using a brazing method;
a base plate (B) to which the impeller body is fixed; and
a rotating shaft (C) which is fixed to the base plate (B),
wherein the disk blade (A) has a basal portion (10) formed in an annular disk-shape, and a plurality of elongated pressed vane portions (11) which are disposed so as to connect an inner circumferential edge and an outer circumferential edge of the basal portion and which projects from one surface side of the basal portion, thereby being capable of applying the impulsive force of the working gas, is provided at the basal portion (10), and
a recessed space (12), where another surface side of the basal portion (10) is in an opened state, is formed in each pressed vane portion (11), and where the pressed vane portion is configured such that a projecting rear portion (11a) which is the most protruded ridge portion thereof is disposed so as to be fixed to the surface of the other side of the basal portion (10) of the adjacent disk blade (A) using a brazing method and to intersect the recessed space (12) of the pressed vane portion (11) of the adjacent disk blade (A) at an intersecting communication space portion (13), and the pressed vane portion (11) is configured such that a portion of the working gas which imparts the impulsive force to the pressed vane portion (11) moves in the recessed space of the adjacent disk blade through the intersecting communication space portion (13) and moves forward in the rotational direction beyond the projecting rear portion (11a) of the pressed vane portion in the intersecting communication space portion (13).

2. The impeller according to Claim 1, wherein the pressed vane portions (11) of one type of disk blade (A1) are disposed in the radial direction from the inner circumferential edge toward the outer circumferential edge of the basal portion (10).

3. The impeller according to Claim 2, wherein the pressed vane portions (11) of the other type of disk blade (A2) are disposed in a direction in which a position in the outer circumferential edge is displaced backward in the rotational direction from a standard direction, which is the radial direction from the inner circumferential edge toward the outer circumferential edge of the basal portion (10).

4. The impeller according to Claim 2, wherein the ed vane portions (11) of the other type of disk blade (A2) are disposed in a direction in which a position in the outer circumferential edge is displaced forwand in the rotational direction from a standard direction, which is the radial direction from the inner circumferential edge toward the outer circumferential edge of the basal portion (20).

5. The impeller according to any one of Claims 1 to 4, wherein the inner circumferential edge of the basal portion (10) of one type of disk blade (A1) has a larger diameter than the inner circumferential edge of the other type of disk blade (A2), or the inner circumferential edge of the basal portion (10) the other type of disk blade (A2) has a larger diameter than the inner circumferential edge of one type of disk blade (A1).

6. The impeller according to any one of Claims 1 to 4, wherein the outer circumferential edge of the basal portion (10) of one type of disk blade (A1) has a smaller diameter than the outer circumferential edge of the other type of disk blade (A2), or the outer circumferential edge of the basal portion (20) of the other type of disk blade (A2) has a smaller diameter than the outer circumferential edge of one type of disk blade (A1).

## Patentansprüche

1. Laufrad für eine Turbine, das bei Verwendung durch eine impulsweise Kraft eines Arbeitsgases rotiert wird, das ausgestoßen wird, wobei das Laufrad für eine Turbine umfasst:
einen Laufradkörper, der durch Befestigen von zwei oder mehr Arten von pressgeformten Scheibenblättern (A) in einem alternierend gestapelten Zustand unter Verwendung eines Lötverfahrens hergestellt wird;
eine Basisplatte (B), an der der Laufradkörper befestigt ist; und
einen Rotationsschaft (C), der an der Basisplatte (B) befestigt ist,
wobei das Scheibenblatt (A) einen basalen Bereich (10) aufweist, der in einer ringförmigen Scheibenform ausgebildet ist, mehrere längliche gepresste Flügelbereiche (11), die so angeordnet sind, dass sie eine innere umlaufende Kante und eine äußere umlaufende Kante des basalen Bereichs verbinden und die von einer Oberflächenseite des basalen Bereichs hervorstehen, wodurch sie in der Lage sind, die impulsweise Kraft des Arbeitsgases anzulegen, an dem basalen Bereich (10) vorgesehen sind; und
ein ausgesparter Raum (12), wo eine weitere Oberflächenseite des basalen Bereichs (10) in einem offenen Zustand ist, in jedem gepressten Flügelbereich (11) ausgebildet ist, und wo der gepresste Flügelbereich so konfiguriert ist, dass ein hervorstehender hinterer Bereich (11a), der der am Meisten hervorstehende Rückenbereich davon ist, so angeordnet ist, dass er an der Oberfläche der weiteren Seite des basalen Bereichs (10) des in Nähe angeordneten Scheibenblatts (A) unter Verwendung eines Lötverfahrens befestigt ist und den ausgesparten Raum (12) des gepressten Flügelbereichs (11) des in Nähe angeordneten Scheibenblatts (A) in einem kreuzenden Verbindungsraumbereich (13) kreuzt, und der gepresste Flügelbereich (11) so konfiguriert ist, dass eine Menge des Arbeitsgases, das die impulsweise Kraft an den gepressten Flügelbereich (11) abgibt, sich in den ausgesparten Raum des in Nähe angeordneten Scheibenblatts durch den kreuzenden Verbindungsraumbereich (13) bewegt und sich weiter in der Rotationsrichtung über den hervorstehenden hinteren Bereich (11a) des gepressten Flügelbereichs in dem kreuzenden Verbindungsraumbereich (13) bewegt.

2. Laufrad nach Anspruch 1, bei welchem die gepressten Flügelbereiche (11) einer Art von Scheibenblatt (A1) in der radialen Richtung von der inneren umlaufenden Kante zu der äußeren umlaufenden Kante des basalen Bereichs (10) angeordnet sind.

3. Laufrad nach Anspruch 2, bei welchem die gepressten Flügelbereiche (11) der anderen Art von Scheibenblatt (A2) in einer Richtung angeordnet sind, in der eine Position in der äußeren umlaufenden Kante nach hinten in der Rotationsrichtung von einer Standardrichtung verlagert ist, die die radiale Richtung von der inneren umlaufenden Kante zu der äußeren umlaufenden Kante des basalen Bereichs (10) ist.

4. Laufrad nach Anspruch 2, bei welchem die gepressten Flügelbereiche (11) der anderen Art von Scheibenblatt (A2) in einer Richtung angeordnet sind, in der eine Position der äußeren umlaufenden Kante nach vorne in der Rotationsrichtung von einer Standardrichtung verlagert ist, die die radiale Richtung von der inneren umlaufenden Kante zu der äußeren umlaufenden Kante des basalen Bereichs (10) ist.

5. Laufrad nach einem der Ansprüche 1 bis 4, bei welchem die innere umlaufenden Kante des basalen Bereichs (10) einer Art von Scheibenblatt (A1) einen größeren Durchmesser aufweist, als die innere umlaufenden Kante der anderen Art von Scheibenblatt (A2) oder die innere umlaufenden Kante des basalen Bereichs (10) der anderen Art von Scheibenblatt (A2) einen größeren Durchmesser als die innere umlaufende Kante einer Art von Scheibenblatt (A1) aufweist.

6. Laufrad nach einem der Ansprüche 1 bis 4, bei welchem die äußere umlaufenden Kante des basalen Bereichs (10) von einer Art von Scheibenblatt (A1) einen kleineren Durchmesser als die äußere umlaufenden Kante der anderen Art von Scheibenblatt (A2) aufweist, oder die äußere umlaufende Kante des basalen Bereichs (10) der anderen Art von Scheibenblatt (A2) einen kleineren Durchmesser als die äußere umlaufende Kante einer Art von Scheibenblatt (A1) aufweist.

## Revendications

1. Roue pour une turbine qui est mise en rotation en utilisation par une force d'impulsion d'un gaz de travail qui est éjecté, la roue pour une turbine comprend :
un corps de roue qui est fait par fixation de deux ou de plus de deux types d'aubes disques (A) embouties à la presse dans un état d'empilement en alternance au moyen d'un procédé de brasage ;
une plaque de base (B) à laquelle le corps de roue est fixé ; et
un arbre rotatif (C) qui est fixé à la plaque de base (B),
dans laquelle l'aube disque (A) a une partie basale (10) formée dans une forme de disque annulaire, et une pluralité de parties palettes embouties allongées (11) qui sont disposées de manière à relier un bord circonférentiel intérieur et un bord circonférentiel extérieur de la partie basale et qui font saillie à partir d'un côté de surface de la partie basale, pouvant ainsi appliquer la force d'impulsion du gaz de travail, est prévue au niveau de la partie basale (10), et
un espace en creux (12), où un autre côté de surface de la partie basale (10) est dans un état ouvert, est formé dans chaque partie palette emboutie (11), et où la partie palette emboutie (11) est configurée de telle sorte qu'une partie arrière saillante (11a) qui est sa partie crête la plus saillante est disposée de manière à être fixée à la surface de l'autre côté de la partie basale (10) de l'aube disque adjacente (A) au moyen d'un procédé de brasage, et pour couper l'espace en creux (12) de la partie palette emboutie (11) de l'aube disque adjacente (A) au niveau d'une partie espace de communication sécante (13) et la partie palette emboutie (11) est configurée de telle sorte qu'une partie du gaz de travail qui applique la force d'impulsion à la partie palette emboutie (11) se déplace dans l'espace en creux de l'aube disque adjacente à travers la partie espace de communication sécante (13) et se déplace vers l'avant dans la direction de la rotation au-delà de la partie arrière saillante (11a) de la partie palette emboutie dans la partie d'espace de communication sécante (13).

2. Roue selon la revendication 1, dans laquelle les parties palettes embouties (11) d'un type d'aube disque (A1) sont disposées dans la direction radiale allant du bord circonférentiel intérieur vers le bord circonférentiel extérieur de la partie basale (10).

3. Roue selon la revendication 2, dans laquelle les parties palettes embouties (11) de l'autre type d'aube disque (A2) sont disposées dans une direction dans laquelle une position située dans le bord circonférentiel extérieur est déplacée vers l'arrière dans la direction de la rotation depuis une direction standard, qui est la direction radiale allant du bord circonférentiel intérieur vers le bord circonférentiel extérieur de la partie basale (10).

4. Roue selon la revendication 2, dans laquelle les parties palettes embouties (11) de l'autre type d'aube disque (A2) sont disposées dans une direction dans laquelle la position située dans le bord circonférentiel extérieur est déplacée vers l'avant dans la direction de rotation depuis une direction standard qui est la direction radiale allant du bord circonférentiel intérieur vers le bord circonférentiel extérieur de la partie basale (10).

5. Roue selon une quelconque des revendications 1 à 4, dans laquelle le bord circonférentiel intérieur de la partie basale (10) d'un type d'aube disque (A1) a un plus grand diamètre que le bord circonférentiel intérieur de l'autre type d'aube disques (A2) ou le bord circonférentiel intérieur de la partie basale (10) de l'autre type d'aube disque (A2) a un plus grand diamètre que le bord circonférentiel intérieur d'un type d'aube disque (A1).

6. Roue selon une quelconque des revendications 1 à 4, dans laquelle le bord circonférentiel extérieur de la partie basale (10) d'un type d'aube disque (A1) a un plus petit diamètre que le bord circonférentiel extérieur de l'autre type d'aube disque (A2) ou le bord circonférentiel extérieur de la partie basale (10) de l'autre type d'aube disque (A2) a un plus petit diamètre que le bord circonférentiel extérieur d'un type d'aube disque (A1).
